# EUROPÄISCHE PATENTSCHRIFT

(11) **EP 0 553 404 B1**
(45) Veröffentlichungstag und Bekanntmachung des Hinweises auf die Patenterteilung: **27.12.1996**
(21) Anmeldenummer: 92118612.8
(22) Anmeldetag: 30.10.1992
(51) Int. Cl.: C08J 11/06, B29B 17/00, F16D 69/02

(54) **Verfahren zur Wiederverwendung von bei der Herstellung von Reibbelägen anfallenden Reststoffen**
Process for re-using residues produced during the production of friction linings
Procédé de réutilisation de déchets produits lors de la production de garnitures de friction

(30) Priorität: 24.01.1992 DE 4201892
(43) Veröffentlichungstag der Anmeldung: 04.08.1993
(73) Patentinhaber: RÜTGERS PAGID AKTIENGESELLSCHAFT, 45356 Essen (DE)
(72) Erfinder: Balzer, Jürgen, W-4250 Bottrop 2 (DE); Eckert, Armin DI, W-4355 Waltrop (DE)
(74) Vertreter: Zenz, Joachim Klaus, Dipl.-Ing.

(56) Entgegenhaltungen:
- EP-A- 0 471 925
- DD-A- 140 348
- DATABASE WPIL Derwent Publications Ltd., London, GB; AN 82-64846E(31) & JP-A-57102979

## Beschreibung

Die Erfindung betrifft ein Verfahren zur Wiederverwendung von bei der Herstellung von organisch gebundenen Reibbelägen anfallenden Reststoffen. Bei der Herstellung dieser Reibbeläge fallen verschiedene meist feinteilige Reststoffe an, wie beispielsweise Filterstäube aus der Absaugung der Mischer für die Reibbelagmasse, Preßgrat bei der Belagfertigung sowie Schleifstaub und Bohrklein bei der Endbearbeitung. Diese Reststoffe werden üblicherweise deponiert. Um die Reststoffe einer sinnvollen Wiederverwendung zuzuführen wird in der älteren Anmeldung (Aktenzeichen P 40 26 623.0) vorgschlagen, die meist staubförmigen Stoffgemische als Füllstoffe in bituminösen Gemischen zu verwenden. Sie dienen dabei als Ersatzstoffe für übliche mineralische Füllstoffe, wie Schiefer- oder Kalksteinmehl. Dieser Verwendung löst zwar das Deponieproblem, wird aber einem so hochwertigen Produkt nicht gerecht.

Aus der JP-A-57102979 ist es ferner bekannt, zur Herstellung von Reibstützern bei der mechanischen Bearbeitung von Reibbelägen anfallenden Abfallstaub mit Harz zu imprägnieren und zu härten. Reibstützer finden jedoch nur als Zusatzmittel zu Reibbelagmischungen Anwendung. Der Bedarf an Reibstützern ist daher begrenzt.

Aufgabe der Erfindung ist es, eine bessere Wiederverwendung von bei der Herstellung von organisch gebundenen Reibbelägen anfallenden Reststoffen zu ermöglichen.

Erfindungsgemäß wird diese Aufgabe dadurch gelöst, daß 15 bis 25 Gew.-% Filterstaub aus der Reibmassenherstellung, 0 bis 20 Gew.%-Preßgrat, 50 bis 85 Gew.-% Schleifstaub aus der Endbearbeitung und 0 bis 20 Gew.-% Bohrklein, ggf. unter Zusatz von maximal 15 Gew.-% organischem Reibbelagbindemittel in Form von hitzebeständigen Polymeren gemischt und zu organisch gebundenen Reibbelägen gepreßt werden.

Als hitzebeständiges Polymer können alle bei der Reibbelagherstellung übliche organische Bindemittel verwendet werden, wie z.B. Phenol- und Epoxidharze, insbesondere aber Kautschuk, wie Butadien-Styrol-Kautschuk oder Nitrilkautschuk, um die Festigkeit im Bereich der Kanten und Bohrungen und die Elastizität des Belages zu erhöhen.

Überraschenderweise wurde gefunden, daß sich aus der erfindungsgemäßen Reibbelagmischung auch ohne zusätzliche Bindemittel Reibbeläge für Scheibenbremsen mit guten Reibwerten und ausreichender Festigkeit und akzeptablem Abrieb herstellen lassen, wenn die Reststoffe aus der Herstellung entsprechend hochwertiger Reibbeläge stammen. Aus diesem Grunde ist es sinnvoll, die Reststoffe etwa gleicher Zusammensetzung getrennt zu lagern und wiederzuverwenden.

Bei der Herstellung von aufnietbaren Reibbelägen für Trommelbremsen ohne Nietlochverstärkung müssen entweder hohe Anteile an Filterstäuben oder zusätzliche Bindemittel der Reibbelagmasse zugesetzt werden, damit der Belag im Nietbereich nicht ausbricht.

Die Erfindung wird anhand der nachfolgenden Beispiele näher erläutert:

### Beispiel 1

1,5 Gew.-% organische Fasern
7 Gew.-% Mineralfasern
20 Gew.-% Metallspäne und -fasern
25 Gew.-% Metallpulver
11 Gew.-% Bindemittel
21 Gew.-% Reibstützer und fester Schmierstoff
14,5 Gew.-% Füllstoffe
werden in einem Doppelwellentrogmischer trocken zu einer Reibbelagmischung verarbeitet. Um einen Staubaustritt zu vermeiden wird der Mischer unter leichtem Unterdruck betrieben. Die abgesaugte Luft wird gefiltert und der dabei anfallende Filterstaub gesammelt. Aus der Reibbelagmischung werden in üblicher Weise Scheibenbremsbeläge hergestellt. Dabei fällt Schleifstaub als Reststoff an.

Aus 18 Gew.-% Filterstaub und 82 Gew.-% Schleifstaub wird eine Reibbelagmischung hergestellt und unter gleichen Bedingungen zu Scheibenbremsbelägen verarbeitet. Die Eigenschaften dieser Beläge sind in der Tabelle 1 denen der oben beschriebenen Beläge ohne Zusatz von Reststoffen gegenübergestellt.

**TABELLE 1**

| | Bremsbelag aus Reststoffen | Bremsbelag ohne Reststoffe |
|---|---|---|
| Scherfestigkeit [daN] | 25 | 25 |
| Reibungskoeffizient bei | | |
| 100 °C | 0,43 | 0,48 |
| 200 °C | 0,43 | 0,49 |
| 300 °C | 0,41 | 0,48 |
| 400 °C | 0,38 | 0,45 |
| 500 °C | 0,35 | 0,40 |
| Abrieb [mm] | 0,12 | 0,15 |
| (100 Stopps; 100 °C) | | |

Wie aus der Gegenüberstellung ersichtlich, sind die Bremsbeläge aus Reststoffen bei gleicher Scherfestigkeit etwas härter. Sie haben daher einen geringeren Abrieb und einen geringfügig verringerten Reibungskoeffizienten, der aber noch innerhalb des geforderten Bereiches liegt (100 °C bis 200 °C : 0,4 bis 0,5; 300 °C : 0,375 bis 0,475; 400 °C : 0,35 bis 0,45; 500 °C : 0,325 bis 0,425).

### Beispiel 2

13 Gew.-% Mineralfasern
34 Gew.-% Metallspäne und -fasern
25 Gew.-% Bindemittel
2,5 Gew.-% Reibstützer und fester Schmierstoff
25,5 Gew.-% Füllstoff
werden trocken gemischt und in üblicher Weise zu Reibbelägen für Trommelbremsen verarbeitet. Dabei fällt neben Filterstaub und Schleifstaub auch Preßgrat und Bohrklein als Reststoff an.

Aus 15 Gew.-% Filterstaub, 15 Gew.-% Preßgrat, 10 Gew.-% Bohrklein, 50 Gew.-% Schleifstaub und 10 Gew.-% Nitrilkautschuk wird eine Reibbelagmischung hergestellt und unter den gleichen Bedingungen zu Reibbelägen für Trommelbremsen verarbeitet. Die auf Bremsbacken aufgenieteten Beläge werden in Tabelle 2 mit denen ohne Zusatz von Reststoffen verglichen.

**TABELLE 2**

| | Reibbelag aus Reststoffen | Reibbelag ohne Reststoffe |
|---|---|---|
| Reibungskoeffizient bei | | |
| 100 °C | 0,45 | 0,45 |
| 200 °C | 0,44 | 0,43 |
| 300 °C | 0,38 | 0,40 |
| 400 °C | 0,36 | 0,39 |
| Abrieb [mm] | 0,15/0,06 | 0,17/0,08 |
| Primär-/Sekundärseite | | |
| (100 Stopps; 100 °C) | | |

Wie der Vergleich zeigt, hat der Bremsbelag aus Reststoffen mit einem Zusatz von Nitrilkautschuk einen geringeren Abrieb und nahezu vergleichbare Reibungskoeffizienten.

## Patentansprüche

1. Verfahren zur Wiederverwendung von bei der Herstellung von Reibbelägen anfallenden Reststoffen,
**dadurch gekennzeichnet**,
daß 15 bis 25 Gew.-% Filterstaub aus der Reibmassenherstellung, 0 bis 20 Gew.-% Preßgrat, 50 bis 85 Gew.-% Schleifstaub aus der Endbearbeitung und 0 bis 20 Gew.-% Bohrklein, ggf. unter Zusatz von maximal 15 Gew.-% organischem Reibbelagbindemittel in Form von hitzebeständigen Polymeren gemischt und zu organisch gebundenen Reibbelägen gepreßt werden.

2. Verfahren nach Anspruch 1, dadurch gekennzeichnet, daß das hitzebeständige Polymer ein Kautschuk ist.

## Claims

1. Method of re-using residues produced in the manufacture of friction linings, characterised in that 15 to 25 wt.% filter dust from the manufacture of friction composition, 0 to 20 wt.% pressing flash, 50 to 85 wt.% grinding dust from the final machining and 0 to 20 wt.% drillings, optionally with the addition of at most 15 wt.% organic friction lining bonding agent in the form of heat-resistant polymers are mixed and pressed into organically bonded friction linings.

2. Method as claimed in Claim 1, characterised in that the heat-resistant polymer is a rubber.

## Revendications

1. Procédé de remploi de déchets produits lors de la fabrication de garnitures de friction, caractérisé en ce qu'on mélange 15 à 25% en poids de poussière de filtration provenant de la fabrication de la masse de friction, 0 à 20% en poids de bavures de presse, 50 à 85% en poids de poussière de meulage provenant de la finition et 0 à 20% de menus d'alésage, éventuellement avec addition de 15% en poids au maximum de liant organique pour garnitures de friction sous forme de polymères thermorésistants et les comprime pour obtenir des garnitures de friction liées organiquement.

2. Procédé selon la revendication 1, caractérisé en ce que le polymère thermorésistant est un caoutchouc.
